(19)

Europäisches
Patentamt
European
Patent Office
Office européen
des brevets

(11) **EP 2 408 191 A1**

(12) **EUROPEAN PATENT APPLICATION**

(43) Date of publication:
**18.01.2012 Bulletin 2012/03**

(51) Int Cl.:
*H04N 5/222* (2006.01)    *A63J 5/02* (2006.01)

(21) Application number: **10169893.4**

(22) Date of filing: **16.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **MediaScreen Bildkommunikation
GmbH
82152 Martinsried (DE)**

(72) Inventors:
• **Spiegel, Sebastian
82193 Starnberg (DE)**
• **Fuerbeck, Bernd
82327 Tutzing (DE)**

(74) Representative: **Reinhard - Skuhra - Weise &
Partner GbR
Patent- und Rechtsanwälte
Friedrichstrasse 31
80801 München (DE)**

(54) **A staging system and a method for providing television viewers with a moving perspective effect**

(57)    A staging system (1) for providing television viewers with a moving perspective effect, said staging system (1) comprising:

(a) a stage screen (2) for displaying at a stage a virtual image to a live audience;

(b) a movable video camera (5) for shooting from different camera viewpoints camera images of the virtual image displayed on said stage screen (2);

(c) a tracking unit (6) for tracking the position of said video camera (5) at the camera viewpoints with respect to said stage screen (2); and

(d) a calculation unit (7) for calculating continuously an asymmetric viewing frustum of said virtual image displayed on said stage screen (2) depending on the tracked position of said video camera (5) to provide video viewers receiving the camera images of said virtual image from said video camera (5) with a moving perspective effect.

**Description**

The invention relates to a staging system and a method for providing television viewers with a moving perspective effect and in particular to a staging system providing television viewers viewing a live show on a stage having a stage screen for displaying a virtual image to a live audience with a moving perspective effect of the displayed virtual image when the camera providing camera images of the live show is moving in front of the stage.

A conventional virtual studio can comprise a computer that generates a three-dimensional scene around a personal presenter standing in front of a blue or green screen, so called blue box. In a studio all camera positions have to be known at any time to ensure a correct image. Cave automatic virtual environment is an immersive virtual reality environment where projectors are directed to three, four, five or six of the walls of a room sized tube. Thus a computer generated virtual world is directly projected on the walls of a cube. The viewer is located inside this cube. In order to provide a correct view head tracking techniques are used to gain the space coordinates X, Y, Z as well as the pan and tilt data of the viewer's sight and position.

In a virtual studio environment the viewer is emerged right from the start into a virtual world and therefore can not be tricked by secondary optical illusions because the virtual world is an optical illusion itself. In a cave the viewer is also completely emerged into a virtual world and an optical illusion is worthless.

The conventional staging systems often provide a stage screen on a stage where an actor or singer is performing in front of a live audience or where a TV moderator is talking in front of a live audience. On a stage screen a virtual image can be displayed to the live audience. In most live shows the actor or singer does not only perform in front of a live audience but the live show is also filmed by one or several TV cameras and transmitted to a plurality of TV screens in private homes where television viewers follow the live show. In such conventional staging systems a movable TV camera within the studio or in front of the live stage shows camera images of the show from different camera viewpoints. When shooting images from different camera viewpoints the camera image show also the virtual image displayed on said stage screen, being for example located behind the stage. However, in conventional staging systems, a changing viewpoint of the TV camera does not reflect on the stage screen so that the TV viewer can not perceive a moving perspective effect when the TV camera is moved in front of the stage.

Therefore, it is an object of the present invention to provide a staging system and a method for providing television viewers with a moving perspective effect when a video camera is moved in front of a stage screen.

The object is achieved by a staging system comprising the features of claim 1.

The invention provides a staging system for providing television viewers with a moving perspective effect, said staging system comprising:

(a) a stage screen for displaying at a stage a virtual image to a live audience;
(b) at least one movable video camera for shooting from different camera viewpoints camera images of the virtual image displayed on said stage screen;
(c) a tracking unit for tracking the position of said video camera at the camera viewpoints with respect to said stage screen; and
(d) a calculation unit for calculating continuously an asymmetric viewing frustum of said virtual image displayed on said stage screen depending on the tracked position of said video camera to provide viewers receiving the camera images of said virtual image from said video camera with a moving perspective effect.

The staging system according to the present invention generates optical illusion windows to a room behind the stage with regard to the principles of an optical illusion.

In an embodiment of the staging system according to the present invention the stage screen is located behind the stage of a live show.

The stage screen can be for example a projection screen, a LED screen or a plasma screen.

In a further possible embodiment the stage screen is located in front of a stage live show. In this embodiment the stage screen can be formed by a semi-transparent holographic screen.

In a possible embodiment of the staging system according to the present invention the tracking unit comprises at least one tracking camera for tracking in real time the current position of the video camera.

In a further embodiment of the staging system according to the present invention a tracking unit detects in real time the coordinates of the video camera at the viewpoints with respect to the stage screen.

In a possible embodiment of the staging system according to the present invention a tracking unit further detects in real time a pan, tilt and zoom (P, T, Z) of the video camera at the viewpoints of the video camera with respect to the stage screen.

In a possible embodiment the video camera comprises a sensor such as a gyrosensor for detecting the pan, tilt and zoom (P, T, Z) of the video camera.

In a possible embodiment of the staging system according to the present invention at least one object is keyed onto said camera image in a DSK layer.

In a possible embodiment the DSK layer is provided within a viewing frustum of said virtual image displayed on the stage screen being visible for the TV viewers or in front of the stage screen being visible only to the TV viewers.

In a possible embodiment of the staging system according to the present invention the video camera is connected via a wired or wireless link to a camera switch providing the camera image via an uplink data connection to a plurality of TV screens of TV viewers.

In a possible embodiment of the staging system according to the present invention the video camera comprises a camera carrier having a remote controlled motor for moving the video camera.

In a further embodiment of the staging system according to the present invention the video camera is a spider camera held by at least two wires each being driven by a motor to move the video camera in three dimensions (X, Y, Z).

In a further embodiment of the staging system according to the present invention the tracking unit comprises at least one receiver for receiving a signal from the video camera to detect the current position of the video camera by means of triangulation.

In a further embodiment of the staging system according to the present invention the video camera moves on a floor comprising markers for tracking in real time the video camera by the tracking unit.

The invention further provides a method for providing television viewers with a moving perspective effect, wherein the method comprises the following steps:

(a) Displaying a virtual image on a stage screen to a live audience;

(b) Shooting from different viewpoints camera images of the virtual image displayed on said stage screen by a moving camera;

(c) Tracking a current position of the camera at the camera viewpoints with respect to said stage screen; and

(d) Calculating continuously an asymmetric viewing frustum of said virtual image displayed on said stage screen depending on the tracked position of the camera to provide the television viewers receiving the camera images of said virtual image from said camera with a moving perspective effect.

In the following preferred embodiments of the staging system and of a method for providing television viewers with a moving perspective effect are described with reference to the enclosed figures.

Fig. 1         is a block diagram of a possible embodiment of a staging system according to the present invention;

Fig. 2         is a block diagram of a further possible embodiment of a staging system according to the present invention;

Fig. 3         is a diagram for illustrating principles underlying the present invention;

Fig. 4a, 4b      are diagrams for illustrating the functionality of a staging system according to the present invention;

Fig. 5         is a block diagram of a further possible embodiment of a staging system according to the present invention;

Fig. 6         is a block diagram of a further possible embodiment of a staging system according to the present invention;

Fig. 7         is a block diagram of a further possible embodiment of a staging system according to the present invention;

Fig. 8         is a block diagram of a further possible embodiment of a staging system according to the present invention;

Fig. 9         is a flow chart of a possible embodiment of a method for providing television viewers with a moving perspective effect according to the present invention;

Fig. 10a, 10b    are pictures presenting views of a tracked TV camera to illustrate the present invention.

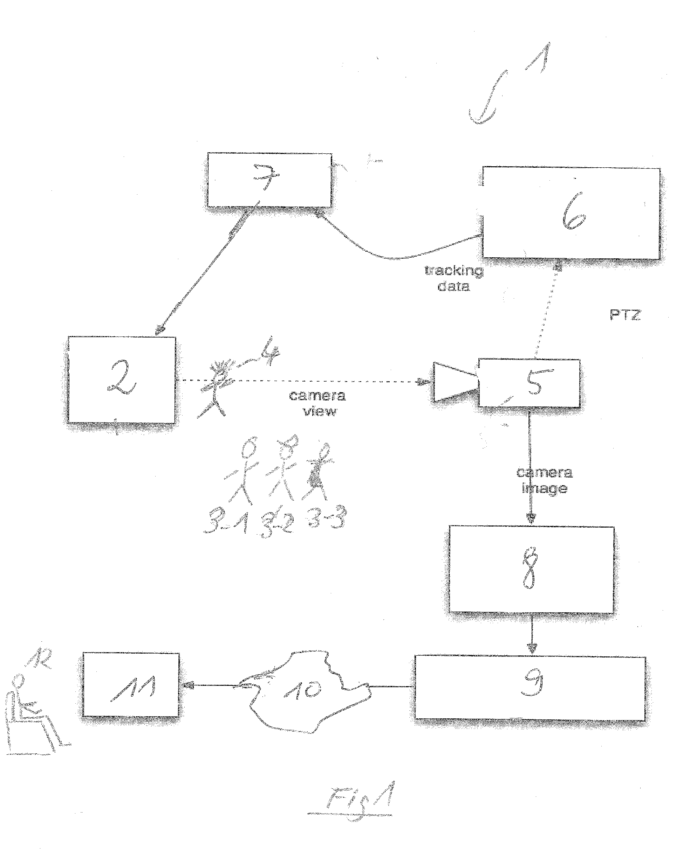

As can be seen from Fig. 1 showing a possible embodiment of a staging system 1 the present invention the staging system 1 comprises at least on stage screen 2 for displaying at a stage a virtual image to a live audience. The live audience is symbolized by persons 3-1, 3-2, 3-3 looking at the stage screen 2. In front of a stage screen 2 the stage can be provided where an actor or a singer 4 is performing a live show. The person 4 can also be a TV moderator moderating a TV show such as a quiz show or the like. The stage screen 2 can be for example be a projection screen, a LED screen or a plasma screen. Any other possible screen technology can also be employed. Furthermore, the stage screen 2 can be a semi-transparent holographic screen.

The staging system 1 according to the present invention as shown in Fig. 1 further comprises a movable video camera 5 for shooting from different camera viewpoints camera images of the virtual image displayed in said stage screen 2. The video camera 5 can be a TV camera. In a possible embodiment the video or movie camera is acquiring or recording 24 fps or more. In the embodiment of Fig. 1 the person 4 is located in front of the stage screen 2. But it is also possible that the person 4 moves around of the stage and even behind the stage screen 2.

The staging system 2 according to the present invention further comprises a tracking unit 6 for tracking the current position of the video camera 5 at the camera viewpoints with respect to said stage screen 2. The tracking unit 6 tracks the relative position of the video camera 5 with respect to the position of the stage screen 2. The tracking unit 2 supplies the tracking data, i.e. the tracked position of the video camera 5, to a calculation unit 7 of the staging system 1. The calculation unit 7 can feed a unlimited amount a realtime graphic workstations. The calculated tracking data is transferred to realtime graphic units which are controlled by said tracking data. The calculation unit 7 calculates continuously an asymmetric viewing frustum of said virtual image displayed on the stage screen 2 depending on the tracked position of the video camera 5.

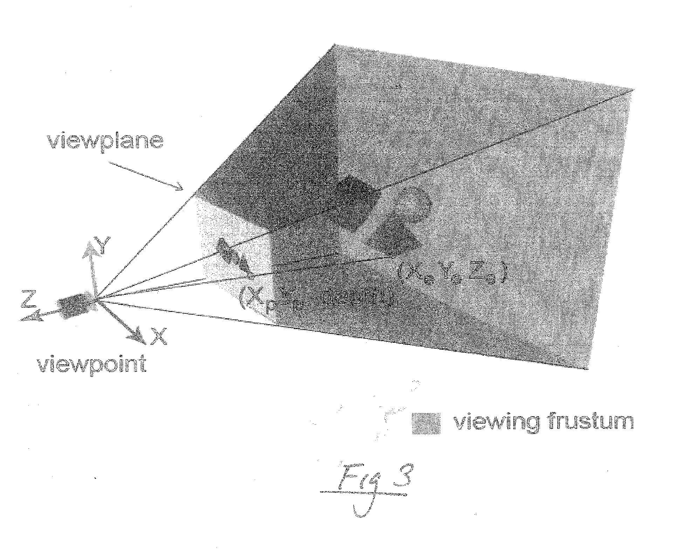

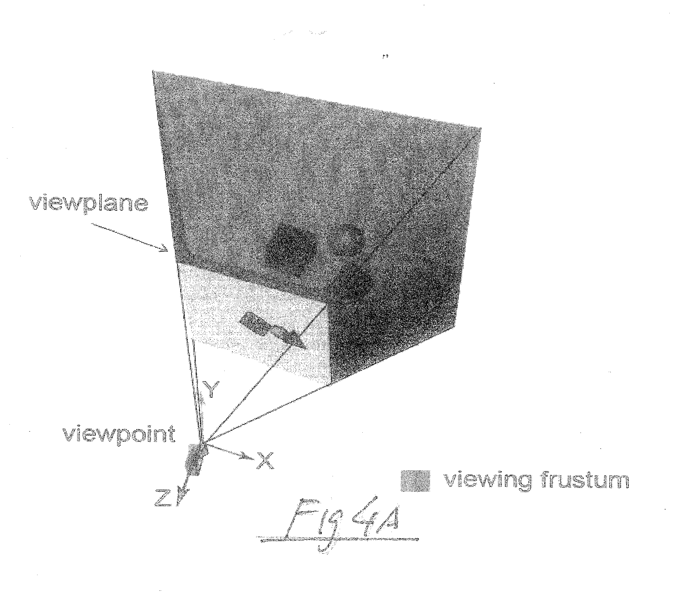

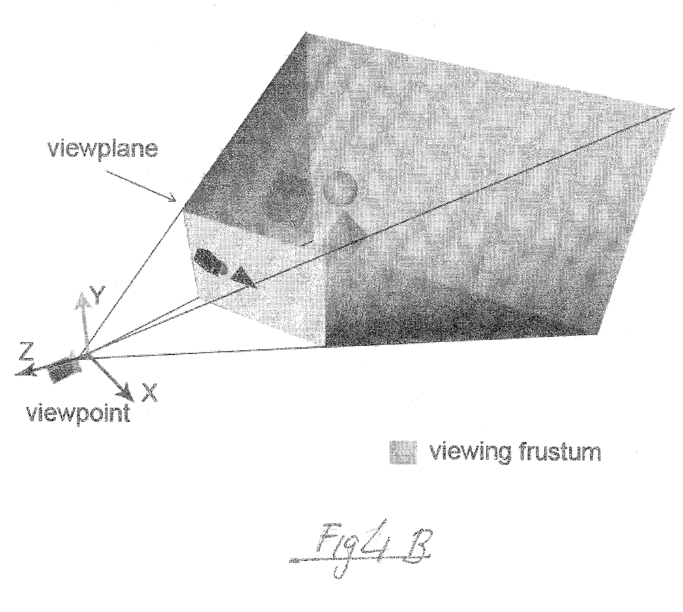

Fig. 3 shows a viewing frustum of an image. A three-dimensional point in eye space is projected onto a near plane or a projection plane. As can be seen from Fig. 3 a point x, y, z in eye space is projected to (Xp, Yp, -depth) on the near plane. In the staging system 1 according to the present invention the near plane is formed by the stage screen 2. The viewpoint shown in Fig. 3 is a viewpoint of the video camera 5. When the video camera 5 moves for example on a floor in front of the stage the viewpoints of the video camera 5 change. If the video camera 5 is centred in front of the stage screen 2 a symmetric viewing frustum can be provided by the video camera 5 since the camera is looking centred into the view plane. When the video camera 5 is moving away from the fixed centre position the calculation unit 7 of the staging system 1 according to the present invention calculates continuously an asymmetric viewing frustum as illustrated in Fig. 4B. The staging system 1 according to the present invention comprises a real time tracking unit 6 to locate the X/Y coordinates of the cameras viewpoints to calculate a dynamic asymmetric viewing frustum for updating the virtual image displayed on the stage screen 3 in real time.

With reference to Fig. 1 the video camera 5 supplies camera image data to a switcher 8 to which one or several video cameras 5 can be connected. The switcher 8 can be part of a camera mixing console. The switcher 8 is connected to an uplink or transmission system 9 providing a TV camera signal via a data communication network 10 to a plurality of TV screens 11 in front of which viewers 12 are located following the live show presented on the stage to the audience 3-i. The transmission system can perform the data transmission via satellite, fiber, copper, internet or radio. The data transmission can in a possible embodiment be a broadcast transmission to a plurality of end users such as TV viewers. In an alternative embodiment the transmission is performed in a closed content network. The calculation unit 7 calculates continuously an asymmetric viewing frustum of the virtual image displayed on the stage screen 2 depending on the tracked position of the video camera 5 and thus providing video viewers 12 looking at the camera images of the virtual image with a moving perspective effect.

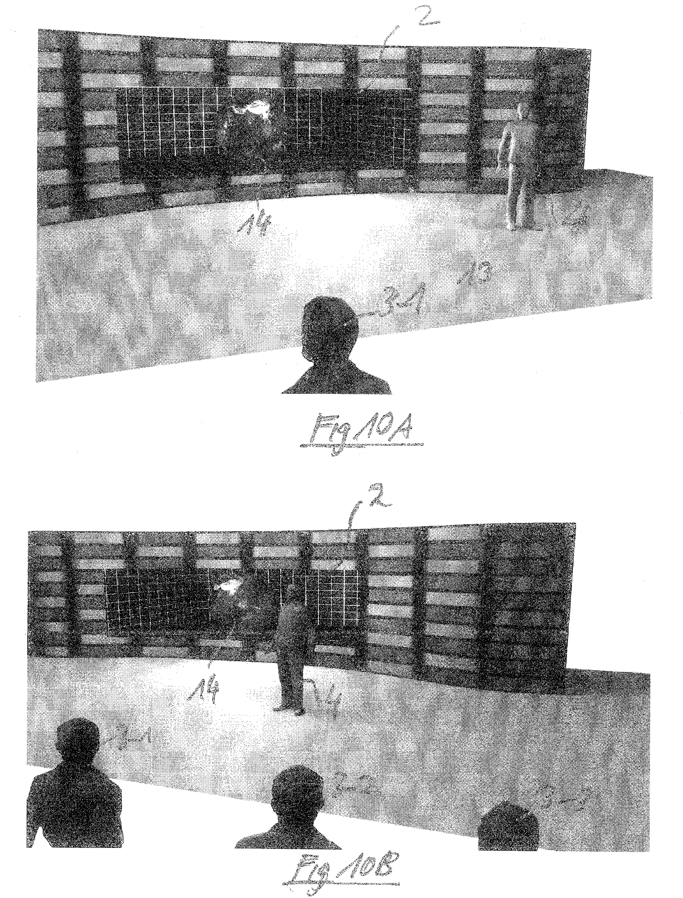

Figs. 10a, 10b illustrate the moving perspective effect which a video viewer 12 perceives. It can be seen in Fig. 10a that an actor or TV moderator 4 stands on a floor 13 of a stage in front of a stage screen 2. The person 4 moves on the stage floor 13 during the show and is observed by persons 3-i of a live audience. A live audience person 3-i can also look at the stage screen 2. As can be seen in Fig. 10a a three-dimensional object 14 can be displayed in the three-dimensional virtual image comprising a viewing frustum. The viewing frustum is symbolized by a grid. In the example shown in Fig. 10a the three-dimensional object is a three-dimensional globe The picture shown in Fig. 10a is taken by a video camera 5 in a first position. After the video camera 5 has moved in the shown example from the left side of the stage to the right side of the stage a camera image is taken by the video camera 5 as shown in Fig. 10b. The picture shown in Fig. 10b is a camera image displayed to a viewer 12 by means of a screen 11 such as a TV screen. As can be seen from Fig. 10b the person 4 can now be seen from the right side. Furthermore, also the viewing frustum of the virtual image displayed on the stage screen 2 is asymmetric and gives the viewer 12 the impression that the video camera 5 has moved because he does see the corresponding virtual image perspective. The change of perspective of the virtual image displayed on the stage screen 2 is only visible for the viewer 12 but not to the live audience 3-i. With the staging system 1 according to the present invention a window on a real stage is defined. The setup shown in Fig. 1 can be used for a live to tape recording as well.

The tracking unit 6 can comprise at least one tracking camera or tracking signal receiver 15 for tracking in real time the current position of the video camera 5. The tracking signal receiver can receive a tracking signal from a tracking signal transmitter of the video camera 5. The tracking unit 6 detects in real time the coordinates $(X_R, Y_R, Z_R)$ of the video camera 5 at the different viewpoints of said video camera 5 with respect to the stage screen 2. In a possible embodiment the tracking unit 6 further detects in real time a pan, tilt and zoom $(R_R, T_R, Z_R)$ of the video camera 5 at the viewpoints of the video camera 5 with respect to the stage screen 2. The calculation unit 7 sets up a virtual world upon the given virtual window data such as height, width and shape. The data provided by the video camera 5, i.e. coordinates $(X_R, Y_R, Z_R)$ of the video camera 5 in the real world, as well as the pan, tilt, zoom $(R_R, T_R, Z_R)$ of the video camera 5 are combined with virtual screen data in real time to calculate a geometrical correct viewing plane for the active video camera 5. Using the actual staging screen 2 the staging screen 2 can as well be used as a normal screen showing content during the show and the live audience 3-i can see the content. However, the three-dimensional effect of moving the video camera 5 can not perceived by the live audience 3-i. This can only be achieved in a possible embodiment by providing additional preview screens for the live audience 3-i.

In a possible embodiment the calculation of the asymmetric viewing frustum by the calculation unit 7 is performed by a function such as a Frustum function or matrix. This function describes a perspective matrix that produces a perspective projection. This frustum function can comprise different parameters, in particular (left, right) which specify the coordinates of the left and right vertical clipping planes. Further parameters are (bottom, top) specifying the coordinates for the bottom and top horizontal clipping planes and (near, far) specifying the distances for the near and far depths clipping planes. In this embodiment the frustum calculation function comprises six parameters, i.e. left-right, bottom-top, near-far. The parameters (left, bottom, near) and (right, top, far) specify the points on the near clipping plane that are mapped to the lower left and upper right corners of the window, respectively, assuming that the eye is located at (0,0,0). Parameter "far" specifies the location of the far clipping plane. In this embodiment the perspective matrix used by the frustum function can be as follows:

$$
F = \begin{pmatrix}
\dfrac{2near}{right - left} & 0 & A & 0 \\
0 & \dfrac{2near}{top - bottom} & B & 0 \\
0 & 0 & C & D \\
0 & 0 & -1 & 0
\end{pmatrix}
$$

wherein A, B, C, D is given by:

$$
A = \frac{right + left}{right - left}; B = \frac{top + bottom}{top - bottom}; C = \frac{far + near}{far - near}; D = \frac{2\,far\,near}{far - near}
$$

The current matrix is multiplied by the above given matrix F with the result replacing the current matrix. That is, if M is the current matrix and F is the frustum perspective matrix, then M is replaced with MxF. Further functions can be employed such as PUSH and POP functions to save and restore the current matrix stack.

In the embodiment shown in Fig. 1 the data communication network 10 can comprise several wired or wireless data communications systems. The data transmission network 10 can comprise also the internet. It is possible that the data communication system 10 is a mobile network. In this embodiment the screen 11 can be implemented in the display of a mobile phone. The screen 11 can also be integrated in a mobile computer or a laptop or a touch screen.

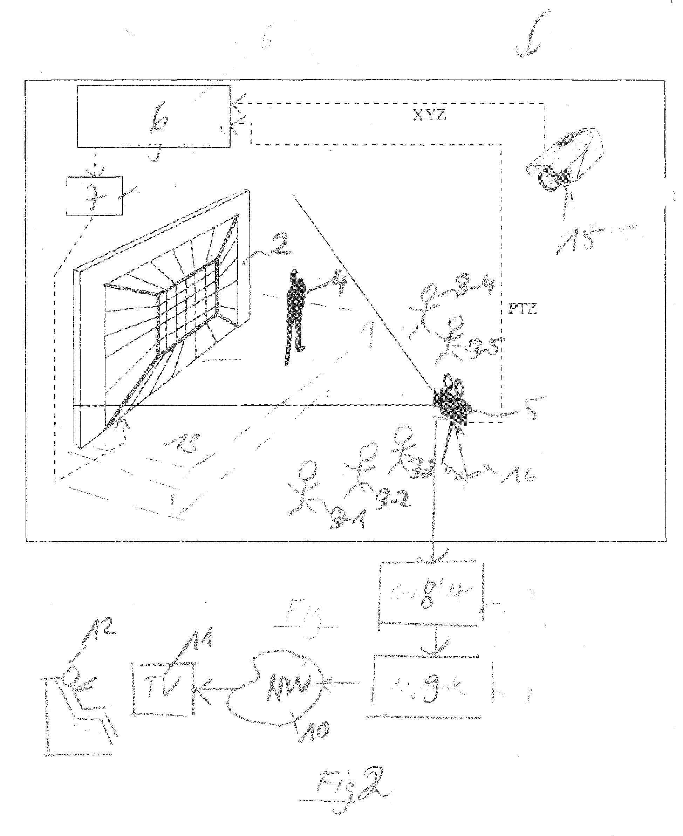

Fig. 2 shows a block diagram of a possible embodiment of a staging system 1 according to the present invention. In the embodiment the tracking unit 6 is connected to one or several tracking cameras 15 or tracking signal receivers 15 receiving a tracking signal from a tracking signal transmitter of the video camera 5. The tracking unit 6 can be connected to only one tracking camera 15 but also to several tracking cameras 15, in particular to four different tracking cameras 15. The tracking cameras or receivers 15 track in real time the current position of the video camera 5. In the embodiment shown in Fig. 2 the video camera 5 is held by a camera carrier 16. This camera carrier 16 can be moved by a cameraman "Mr. Charles" or by a remote controlled motor moving the video camera 5 in front of the stage 13. On the stage 13 a real actor or TV moderator 4 can act to an audience 3-I and be filmed by the video camera 5. The person 4 shown in Fig. 2 must not be a real person. In a possible embodiment there can be a virtual object 4 projected in front of the stage screen 2 visible only to the TV viewers 12.

In the embodiment shown in Fig. 2 the tracking unit 6 is connected to one or several tracking cameras or receivers 15. In an alternative embodiment the tracking unit 6 comprises at least one receiver for receiving a signal from the video camera 5 to detect the current position of the video camera 5 my means of triangulation. In this embodiment the video camera 5 comprises a transmitter for sending a signal to at least one receiver connected to the tracking unit 6. In a possible embodiment the signals are received by different receivers and evaluated by the tracking unit 6 who calculates the current position of the video camera 5 by means of triangulation. In an alternative embodiment video camera 5 transmits an encoded signal encoding the current position of the video camera 5 wherein the actual position of the video camera 5 is detected from the video camera 5 itself by means of integrated sensors. In a further embodiment of the tracking unit 6 the tracking unit 6 is connected to tracking cameras or tracking receivers 15 and the current position of the video camera 5 is tracked in real time by means of markers attached to a floor on which the video camera 5 moves. The markers can also be attached anywhere in the room where the camera 5 moves.

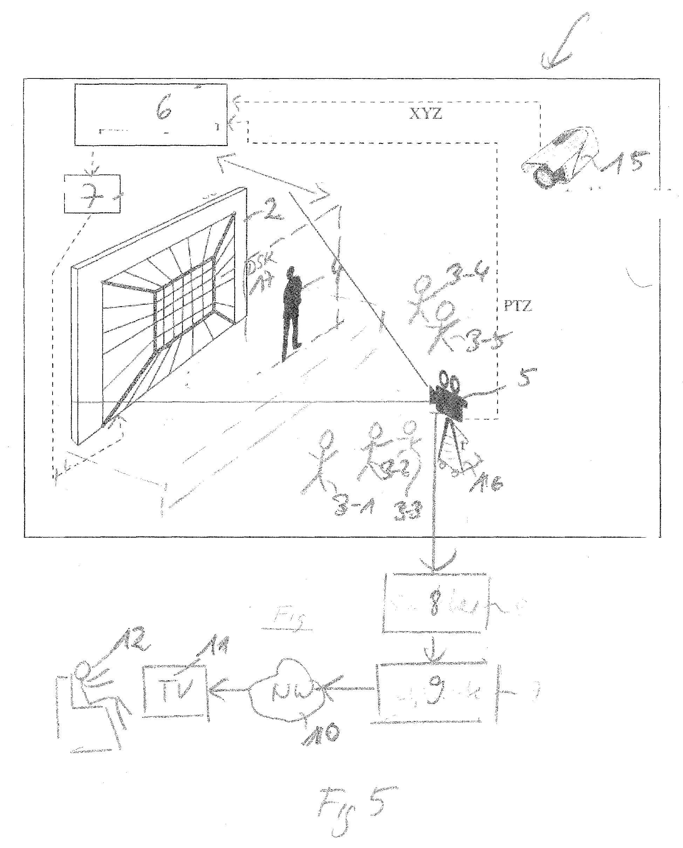

Fig. 5 shows a further possible embodiment of a staging system 1 according to the present invention. In this embodiment at least one object 4 is keyed onto the camera image in a DSK layer 17. The object 4 is in the shown embodiment a person 4 being a virtual object keyed on the camera image in front of the staging screen 2. The object 4 on the camera image on the DSK layer 17 is provided in front of the stage screen 2 and is only visible to the viewers 12. It is also possible that the DSK layer 17 is provided within the viewing frustum of the virtual image displayed on the stage screen 2 and is then visible not only to the viewers 12 but also the live audience 3-i. In a possible embodiment several DSK layers 17-I are provided. It is possible that the DSK layer 17 as shown in Fig. 5 can move continuously in a direction perpendicular to the staging screen 2 as illustrated in Fig. 5. The object 4 can be a virtual person but also any other kind of virtual objects such as a three-dimensional globe shown in Fig. 10a, 10b. The object 4 is visible on the stage screen 2 while the video camera 5 is shooting in a eg 90° angle towards the staging screen 2 and becomes an animated virtual extension of the staging screen 2 when the video camera 5 moves out of the eg 90° angle. The object 4 is keyed onto the picture acquired by the video camera 5 by using DSK. The DSK layer 17 is invisible while shooting in a eg 90° angle and starts floating out of the staging screen 2 as soon as the angle of the video camera is less or more than eg 90°. The actual angle and position can be calculated in real time according to data delivered by the positioning or tracking system. The camera angle towards the DSK layer stays eg 90° whereas the angle of the video camera 5 towards the stage screen 2 is less or more than eg 90° depending on the movement of the video camera 5 which moves clockwise or counter clockwise. The actual angle used can be defined in the initial calibration process and can be anything between 0 and 180 degrees. However, once chosen the angle needs to stay the same until a further calibration is made.

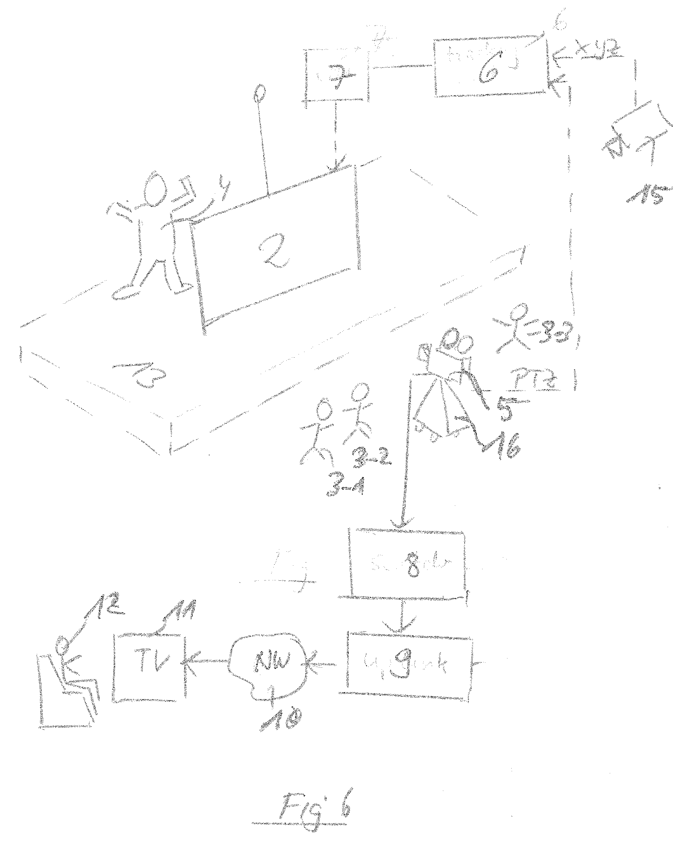

Fig. 6 shows a possible embodiment of a staging system 1 of the present invention. As shown in embodiment of Fig. 6 a real person such as an actor or a TV moderator is positioned on a floor 13 of a stage in front of a live audience 3-i. In the shown embodiment the real person 4 is not located in front of the stage screen 2 but behind it. In this embodiment the stage screen 2 can be formed by a semitransparent holographic screen. In a further embodiment an acting person 4 can move between two screens 2 wherein one stage 2 screen is located behind the person 4 and another stage screen 2 such as a holographic screen is located in front of the moving person 4.

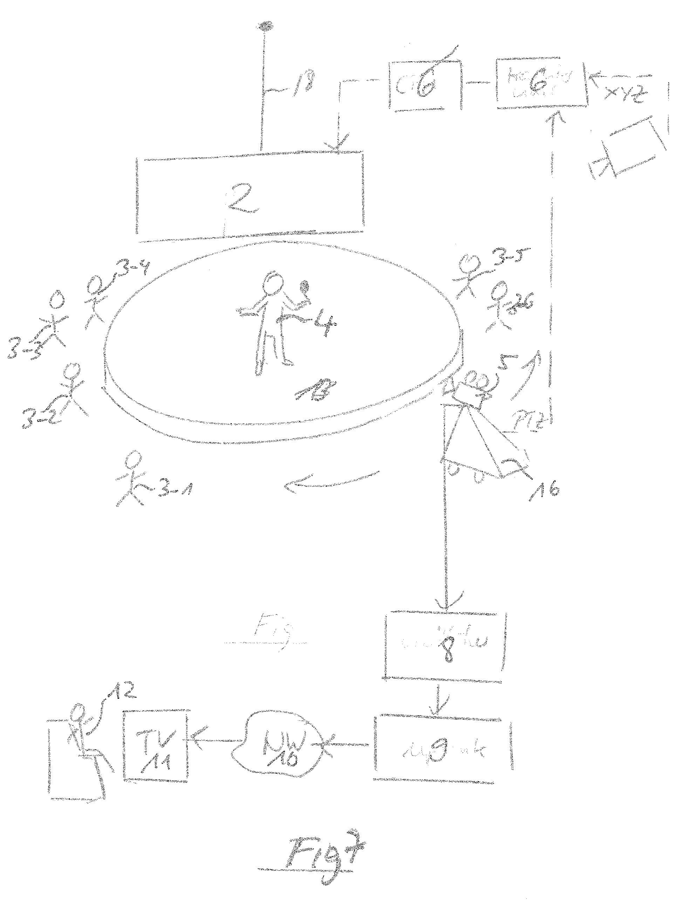

Fig. 7 illustrates a further possible embodiment of a staging system 1 according to the present invention. In thus embodiment the stage is a 360° stage where a real person 4 such as a singer or actor is acting on a floor 13 of the stage in front of a live audience 3-i which is grouped around the edge of the stage as shown in the embodiment of Fig. 7. The stage screen 2 hangs from a wire connected to the ceiling of a showroom. The stage screen 2 can be rigged, ground supported or even mounted on any kind of rail system. As shown in embodiment of Fig. 7 the stage screen 2 is a flat stage screen. In a possible embodiment the stage screen 2 is adapted to the form of the stage and comprises the form of a semi-circle or any other geometric form. The video camera 5 is in front of the stage and moves clockwise or counter clockwise around the 360° stage as illustrated in Fig. 7. In the shown embodiment the stage screen 2 is kept at a fixed position. In an alternative embodiment the stage screen 2 can be moved in accordance with a movement of the video camera 5 such that the acting person 4 is always located between the video camera 5 and the stage screen 2 positioned behind the 360° stage.

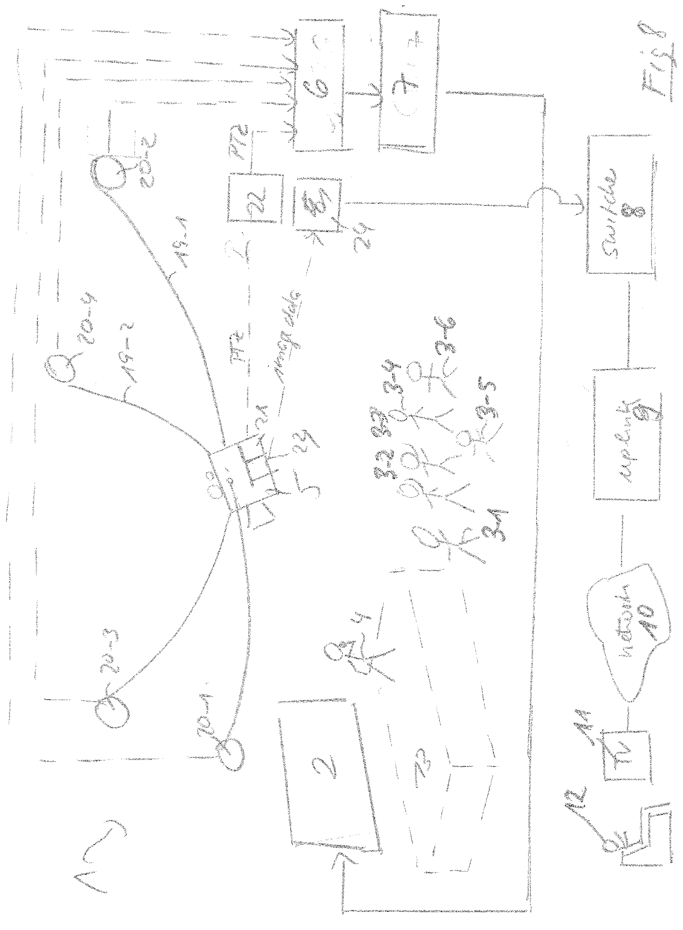

Fig. 8 shows a further possible embodiment of a staging system 1 according to the present invention. As shown in the embodiment of Fig. 8 the video camera 5 is a spider camera held by at least two wires (19-1, 19-2) driven by motors by means of rollers 20-i, which move the video camera 5 in three-dimensions (X, Y, Z) in front of the stage 13. As shown in the embodiment of Fig. 8 the video camera 5 comprises a first transmitter transmitting in real time a pan, tilt and zoom PTZ to a first receiver which supplies the pan, tilt and zoom P, T, Z of the TV camera 5 to the tracking unit 6. Furthermore, the video camera 5 comprises a second transmitter 23 transmitting image data to a second receiver 24 supplying the camera image to the switch 8 of the system.

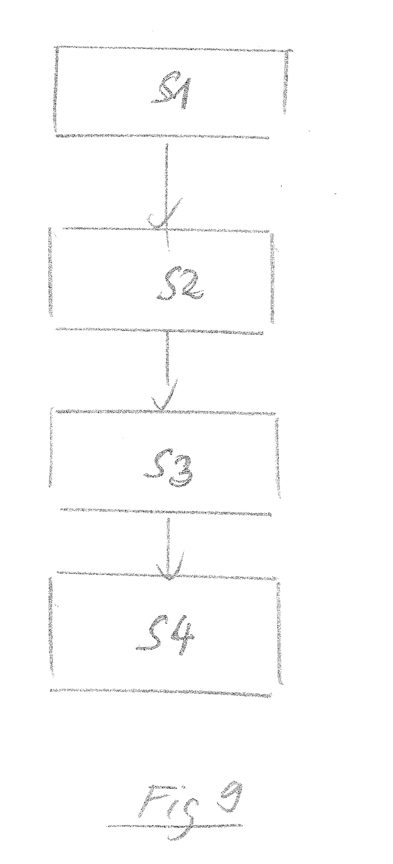

Fig. 9 shows a flow chart for a possible embodiment and a method for providing television viewers with a moving perspective effect according to the present invention.

In step S1 a virtual image is displayed on a stage screen 2 to a live audience.

In step S2 a camera shoots from different viewpoints camera images of the virtual image displayed on the stage screen 2.

In step S3 the current position of the camera at the camera viewpoints is tracked with respect to the stage screen 2.

In a further step S4 a calculation unit calculates continuously an asymmetric viewing frustum of the virtual image displayed on the stage screen 2 depending on the tracked position of the camera to provide television viewers receiving the camera images of the virtual image from the video camera with a moving perspective effect.

The staging system 1 according to the present invention can be used for any live event where a dimensional stage is located. Live events can be for example concerts, theatre plays or any kind of TV shows such as a quiz show or an award show such as the Oscar award show. With the DSK layer shown in the embodiment of Fig. 5 it is possible to move out objects out of the stage screen 2 thus generating special effects for viewers 12 following the live event. An object 4 as shown in Fig. 5 can comprise also content data such as a text message, lower third or the like. In a staging system 1 according to the present invention camera images provided by the video camera 5 can also be stored first in a data storage before being forwarded to the TV viewers. In this embodiment of the staging system 1 can comprise a data storage for storing the taken camera images temporarily. In a further embodiment the camera images are forwarded to the viewers with an adjustable delay time. In this embodiment mistakes of the acting person during the live show can be corrected befor the viewers 12 can see them. In the staging system 1 according to the present invention the stage screen 2 must not be located in a studio room but can also be arranged in open space. In a preferred embodiment the stage screen 2 comprises a fixed position.

In a further embodiment the stage screen 2 can also be movable. In a further embodiment the stage screen is moved on a movable vehicle on a stage floor 13.

The stage screen 2 can also be provided for educational purposes for example in a virtual university having students which are sitting in front of screens 11. The system can be extended in that the viewer 12 is also filmed by a further camera such as a webcam and is displayed to the live audience 3 by a further screen in the vicinity of the stage screen 2. In this embodiment it is possible that the viewer 12 can interact with the live audience 3 and even with an acting person 4. For example the TV viewer 12 can ask the actor 4 behave in a certain way in front of the stage screen 2 and can look at the result on its screen 11. In this way a student 12 of a virtual university can ask a professor 4 to point to certain objects displayed on the stage screen 2 for giving additional explanations.

Accordingly, the staging system 1 according to the present invention has a wide range of applications not only in entertainment systems but also in educational systems, tradeshows, museums, promotions or exhibitions. The staging system 1 according to the present invention can also be used for video conferences wherein two live audiences interact.

**Claims**

1. A staging system (1) for providing television viewers with a moving perspective effect,
   said staging system (1) comprising:

   (a) a stage screen (2)for displaying at a stage a virtual image to a live audience;
   (b) a movable video camera (5) for shooting from different camera viewpoints camera images of the virtual image displayed on said stage screen (2);
   (c) a tracking unit (6) for tracking the position of said video camera (5) at the camera viewpoints with respect to said stage screen (2); and
   (d) a calculation unit (7) for calculating continuously an asymmetric viewing frustum of said virtual image displayed on said stage screen (2) depending on the tracked position of said video camera (5) to provide video viewers receiving the camera images of said virtual image from said video camera (5) with a moving perspective effect.

2. The staging system according to claim 1,
   wherein said stage screen (2) is located behind or in front of a stage of a live show.

3. The staging system according to claims 1 or 2,
   wherein said tracking unit (6) comprises at least one tracking camera or tracking signal receiver (15) for tracking in real time the current position of said video camera (5).

4. The staging system according to claims 1 - 3,
   wherein said tracking unit (7) detects in real time the coordinates $(X_R, Y_R, Z_R)$ of said video camera (5) at the viewpoints with respect to said stage screen (2).

**5.** The staging system according to claim 4,
wherein said tracking unit (6) further detects in real time a pan, tilt and zoom ($R_R$, $T_R$, $Z_R$) of said video camera (5) at the viewpoints of said video camera (5) with respect to said stage screen (2).

**6.** The staging system according to claim 5,
wherein said video camera (5) comprises a sensor for detecting the pan, tilt and zoom (P, T, Z) of said video camera (5).

**7.** The staging system according to claims 1 - 6,
wherein at least one object is keyed onto said camera image in a DSK layer (17).

**8.** The staging system according to claim 7,
wherein said DSK layer (17) is provided within said viewing frustum of said virtual image displayed on said stage screen (2) visible for the live audience and the viewers or in front of said stage screen (2) visible only to the viewers.

**9.** The staging system according to claims 1- 8,
wherein said video camera (5) is connected via a wired or a wireless link to a camera switch (8) providing said camera image via an uplink data connection (9) to a TV screen (11) for TV viewers (12).

**10.** The staging system according to claims 1- 9,
wherein said video camera (5) comprises a camera carrier having a remote controlled motor for moving said video camera (5).

**11.** The staging system according to claims 1 - 9,
wherein the video camera (5) is a spider camera held by at least two wires each being driven by a motor to move said video camera (5) in three dimensions.

**12.** The staging system according to claim 1,
wherein said tracking unit (6) comprises at least one receiver for receiving a signal from said video camera (5) to detect the current position of said video camera (5) by means of triangulation.

**13.** The staging system according to claim 1,
wherein said video camera (5) moves on a floor in front or on said stage wherein the room comprises markers for tracking in real time said video camera (5) by said tracking unit (6).

**14.** The staging system according to claims 1 - 13,
wherein said stage screen (2) comprises:

a projection screen, or a
LED screen, or a
plasma screen, or a
Semi-transparent holographic screen or any type of
video wall system consisting of one or several single screens or panels.

**15.** A method for providing television viewers with a moving perspective effect, the method comprising the steps of:

(a) Displaying (S1) a virtual image on a stage screen (2) to a live audience;
(b) Shooting (S2) from different viewpoints camera images of the virtual image displayed on said stage screen (2) by a moving video camera (5);
(c) Tracking (S3) a current position of the video camera (5) at the camera viewpoints with respect to said stage screen (2); and
(d) Calculating (S4) continuously an asymmetric viewing frustum of said virtual image displayed on said stage screen (2) depending on the tracked position of the video camera (5) to provide the television viewers (12) receiving the camera images of said virtual image from said video camera (5) with a moving perspective effect.

tracking
data

PTZ

camera
view

camera
image

Fig.1

Fig 2

Fig 3

viewplane

viewpoint

Y

X

Z

viewing frustum

Fig 4A

viewplane

Y

Z

X

viewpoint

viewing frustum

Fig. 4 B

Fig 5

Fig. 6

Fig. 1

20-3

20-4

19-2

20-2

20-1

19-1

PTz

22

PTz

21

23

message data

24

2

4

3

6

7

32 33 34

3-6

3-1

3-5

12

11

network 10

uplink 9

switche 8

Fig 8

S1

S2

S3

S4

Fig 9

19

Europäisches
Patentamt

European
Patent Office

Office européen
des brevets

# EUROPEAN SEARCH REPORT

Application Number

EP 10 16 9893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/165310 A1 (MACK NEWTON E [US]) 27 July 2006 (2006-07-27) * paragraphs [0003], [0006] * * paragraphs [0008] - [0009] * * paragraphs [0021], [0023], [0032] * | 1-15 | INV. H04N5/222 A63J5/02 |
| A | AU 13242 70 A (UNITED TELECASTERS SYDNEY LIMITED) 7 October 1971 (1971-10-07) * page 2, lines 1-8 * * page 4, line 1 - page 5, line 8 * | 1-15 | |
| A | US 3 486 430 A (SHUFTAN EUGEN J) 30 December 1969 (1969-12-30) * column 1, lines 30-40,54-60 * * column 2, lines 16-34 * | 1-15 | |
| X | WO 97/03416 A1 (SARNOFF DAVID RES CENTER [US]) 30 January 1997 (1997-01-30) * page 2, lines 3-24 * * page 3, lines 5-22 * * page 4, lines 7-18 * * page 4, line 29 - page 5, line 14 * * page 8, lines 34-36 * * page 9, lines 9-13, 24-27 * * page 9, line 38 - page 10, line 8 * * page 10, lines 14-19 * * page 11, lines 3-9 * | 1-15 | TECHNICAL FIELDS SEARCHED (IPC) H04N G06T A63J |

The present search report has been drawn up for all claims

| Place of search | Date of completion of the search | Examiner |
|---|---|---|
| The Hague | 1 December 2010 | Borcea, Veronica |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                       
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 16 9893

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2010

| Patent document cited in search report | | Publication date | Patent family member(s) | | Publication date |
|---|---|---|---|---|---|
| US 2006165310 | A1 | 27-07-2006 | NONE | | |
| AU 1324270 | A | 07-10-1971 | NONE | | |
| US 3486430 | A | 30-12-1969 | NONE | | |
| WO 9703416 | A1 | 30-01-1997 | DE | 69635347 D1 | 01-12-2005 |
| | | | DE | 69635347 T2 | 13-07-2006 |
| | | | EP | 0838068 A1 | 29-04-1998 |
| | | | JP | 11509064 T | 03-08-1999 |
| | | | US | 6522787 B1 | 18-02-2003 |

EPO FORM P0459

For more details about this annex : see Official Journal of the European Patent Office, No. 12/82